# EUROPEAN PATENT SPECIFICATION

(11) **EP 4 583 266 B1**
(45) Date of publication and mention of the grant of the patent: **03.06.2026**
(21) Application number: 24221818.8
(22) Date of filing: 19.12.2024
(51) Int. Cl.: H01M 50/172, H01M 50/178, H01M 50/474, H01M 50/477, H01M 50/486, H01M 50/533, H01M 50/55

(54) **ENERGY-STORAGE DEVICE AND ELECTRICITY-CONSUMPTION APPARATUS**
ENERGIESPEICHERVORRICHTUNG UND ELEKTRIZITÄTSVERBRAUCHSVORRICHTUNG
DISPOSITIF DE STOCKAGE D'ÉNERGIE ET APPAREIL DE CONSOMMATION D'ÉLECTRICITÉ

(30) Priority: 08.01.2024 CN 202420042644 U
(43) Date of publication of application: 09.07.2025
(73) Proprietor: Hithium Tech HK Limited, Hong Kong (HK)
(72) Inventor: LI, Yajing, Xiamen, 361100 (CN); XIAO, Hepan, Xiamen, 361100 (CN)
(74) Representative: Santarelli

(56) References cited:
- EP-A1- 3 770 995
- EP-A1- 4 203 174
- US-A1- 2018 013 123
- US-A1- 2020 251 711

## Description

### TECHNICAL FIELD

The disclosure relates to the field of energy-storage, and in particular, to an energy-storage device and an electricity-consumption apparatus.

### BACKGROUND

Secondary batteries, also known as rechargeable batteries or storage batteries, refer to batteries that can continue to be used by reactivating the active material through charging after the batteries are discharged. The recyclable nature of the secondary battery has gradually made them the main power source for electricity-consumption apparatuses. As the demand for the secondary battery increases, there are higher requirements for their energy density, reliability, and cost. Document US 2020/251711 A1 discloses an energy-storage device including tabs disposed between an electrode assembly and a lid.

In order to improve the energy density of the secondary battery, the size of the electrode assembly is typically made larger. However, a larger electrode assembly further reduces the gap between the electrode assembly and the top cover. As a result, the space for arranging the tab becomes very limited, and the tab is prone to stress concentration, which leads to a decline in the stability of the electrical connection, thereby reducing the reliability of the secondary battery.

### SUMMARY

A purpose of the disclosure is to provide an energy-storage device and an electricity-consumption apparatus to address the issue of stress concentration occurring in a tab, which may lead to a decrease in the stability of the electrical connection and a reduction in the reliability of a secondary battery.

To achieve the purpose of the disclosure, the following technical solutions are provided in the disclosure.

In a first aspect, an energy-storage device is provided. The energy-storage device includes an electrode assembly, a tab, a connector, and a lower plastic assembly. One end of the tab is connected to the electrode assembly, and the tab extends in a bent manner. The connector is connected to another end of the tab. The lower plastic assembly has a first surface and a second surface opposite the first surface. The first surface faces towards the tab. The connector is located between the lower plastic assembly and the electrode assembly. An avoidance recess is defined in the first surface. The avoidance recess is located at an edge of the lower plastic assembly in a width direction of the lower plastic assembly and extends in a length direction of the lower plastic assembly. The tab has an extension portion, a bent portion, an inclined portion, and a connection portion that are sequentially connected. One end of the extension portion away from the bent portion is connected to the electrode assembly. One end of the connection portion away from the inclined portion is connected to the connector, and the bent portion extends in a bent manner and extends into the avoidance recess.

The avoidance recess is defined in the first surface of the lower plastic assembly to accommodate at least part of the tab, increasing the space available for arranging the tab. This ample arrangement space for the tab reduces stress concentration, thereby preventing a decrease in the stability of the electrical connection and ensuring the reliability of the energy-storage device. Since the avoidance recess can accommodate at least part of the tab, more space is available for bending of the tab. This reduces the bending angle of the tab, thereby decreasing stress concentration. By configuring the bent portion to extend into the avoidance recess, the bending angle of the bent portion can be increased, thereby enlarging the included angle between the inclined portion and the extension portion. This prevents the bending angle of the bent portion from being too small, as a too small bending angle would otherwise reduce the included angle between the inclined portion and the extension portion and lead to stress concentration.

**In** one embodiment, the connector is spaced apart from the extension portion. This creates a gap between the extension portion and the connector, allowing for the arrangement of the inclined portion. This configuration allows the gap between the extension portion and the connector to be utilized for the arrangement of the tab, thereby expanding the space for the arrangement of the tab and further reducing stress concentration.

In one embodiment, one end of the inclined portion connected to the bent portion is spaced apart from the electrode assembly by a first distance, another end of the inclined portion connected to the connection portion is spaced apart from the electrode assembly by a second distance, and the first distance is greater than the second distance. Setting the first distance greater than the second distance allows the one end of the inclined portion connected to the bent portion to be farther away from the electrode assembly than the another end of the inclined portion connected to the connection portion. That is, with respect to the electrode assembly as a reference, the height of the one end of the inclined portion connected to the bent portion is higher, while the height of the another end of the inclined portion connected to the connection portion is lower. This arrangement allows the bent portion to extend into the avoidance recess, while the connection portion can be easily connected to the connector.

In one embodiment, the connector has a third surface and a fourth surface opposite the third surface, where the third surface is opposite to the first surface, and the connection portion is connected to the fourth surface. The connection portion is connected to the fourth surface, making the connection process between the tab and the connector easier.

In one embodiment, the connector has an inclined surface, where the inclined surface connects the third surface to the fourth surface, and the inclined surface faces towards the inclined portion. By providing the inclined surface of the connector, which faces towards the inclined portion and serves to allow clearance for the inclined portion, thereby providing a greater space for the arrangement of the inclined portion and preventing the inclined portion from contacting an edge corner of the connection portion and avoiding damage to the tab.

In one embodiment, the inclined portion and the connection portion define a first included angle *A,* the inclined surface and the fourth surface define a second included angle *B,* and the first included angle *A* and the second included angle *B* satisfy 0° ≤ |*A - B*| ≤ 30°. The first included angle *A* and the second included angle *B* satisfy 0° ≤ |*A* - *B*| ≤ 30°, allowing the inclined portion and the inclined surface to be substantially parallel to each other or to define a small included angle therebetween. This configuration prevents the inclined portion from easily coming into contact with the connector, thereby avoiding stress concentration on the tab caused by the pressure from the connector.

In one embodiment, the tab protrudes beyond the third surface. Such an arrangement allows a space of the avoidance recess to accommodate at least part of the tab, thereby increasing the space for the arrangement of the tab and reducing stress concentration.

In one embodiment, a side wall of the avoidance recess closer to a center of the lower plastic assembly is aligned with a side edge of the connector. In this way, the connector in third direction does not significantly occupy the space of the avoidance recess, allowing sufficient room for the arrangement of the tab.

In one embodiment, the tab is connected to a side edge of the electrode assembly in a thickness direction of the electrode assembly and extends towards another side edge of the electrode assembly in the thickness direction of the electrode assembly. Compared to a configuration where the tab is connected to a middle region of the electrode assembly in the thickness direction of the electrode assembly, the embodiments of the disclosure position the tab at the side edge of the electrode assembly in the thickness direction of the electrode assembly. This allows the middle portion of the electrode assembly, as well as another side edge away from the tab, to be free from the tab, thereby facilitating the arrangements of other components and enabling more efficient use of limited space.

In one embodiment, the tab is connected to a side edge of the electrode assembly in a thickness direction of the electrode assembly and extends towards another side edge of the electrode assembly in the thickness direction of the electrode assembly. This arrangement places both the first tab and the second tab on the same side, thereby also facilitating the arrangements of other components and enabling more efficient use of limited space.

In one embodiment, the electrode assembly is implemented as two electrode assemblies, where the two electrode assemblies are arranged side by side in the thickness direction of the electrode assembly, and wherein for each of the two electrode assemblies, both the first tab and the second tab are connected to a side edge of the electrode assembly away from another electrode assembly. This arrangement provides ample space between the two first tabs of the two electrode assemblies, as well as ample space between the two second tabs of the two electrode assemblies, facilitating the arrangement of other components.

In one embodiment, the connector includes a first connector and a second connector, where for each of the two electrode assemblies, the first tab connected to the electrode assembly is connected to the first connector, and the second tab connected to the electrode assembly is connected to the second connector. By using a single first connector to connect both the two first tabs and a single second connector to connect both the two second tabs, the number of connectors is reduced from four to two compared with a configuration where each tab (i.e., the first tab or the second tab) is connected to an independent connector. This reduction in connectors enhances the integration level of the energy storage device.

In a second aspect, the disclosure further provides an electricity-consumption apparatus. The electricity-consumption apparatus includes an electricity-consumption device and the energy-storage device provided in any one of the embodiments in the first aspect, where the energy-storage device is configured to power the electricity-consumption device

### BRIEF DESCRIPTION OF THE DRAWINGS

To describe technical solutions in embodiments of the disclosure or the related art more clearly, the following briefly introduces the accompanying drawings required for describing the embodiments or the related art. Apparently, the accompanying drawings in the following description merely illustrate some embodiments of the disclosure. Those of ordinary skill in the art may also obtain other accompanying drawings based on these provided herein without creative efforts.
FIG. 1 is a diagram illustrating application scenarios of an energy-storage device according to an embodiment.
FIG. 2 is a perspective view of an energy-storage device according to an embodiment.
FIG. 3 is an exploded view of an energy-storage device according to an embodiment.
FIG. 4 is a front view of an energy-storage device according to an embodiment.
FIG. 5 is a cross-sectional view of FIG. 4, taken along line E-E.
FIG. 6 is a partial enlarged view at circle Q in FIG. 5.
FIG. 7 is a perspective view of a lower plastic assembly according to an embodiment.
FIG. 8 is an enlarged partial view of an electrode assembly and a tab in FIG. 6.
FIG. 9 is a partial enlarged exploded view of the tab and a connector in FIG. 6.
FIG. 10 is a schematic diagram of an electricity-consumption apparatus.

Reference numerals are described as follows:
1000 - energy-storage device, 2000 - photovoltaic panel, 3000 - wind turbine, 4000 - power grid, 10 - housing, 20 - electrode assembly, 30 - tab, 31 - first tab, 311 - merging portion, 312 - extension portion, 313 - bent portion, 314 - inclined portion, 315 - connection portion, 32 - second tab, 40 - connector, 41 - first connector, 411 - third surface, 412 - fourth surface, 413 - inclined surface, 42 - second connector, 50 - end cover assembly, 51 - top cover, 511 - electrolyte injection hole, 52 - lower plastic assembly, 521 - first surface, 522 - second surface, 523 - avoidance recess, 53 - terminal post, 531 - first disc body, 532 - first column body, 533 - second disc body, 534 - second column body, 54 - sealing ring, 541 - first sealing ring, 542 - second sealing ring, 55 - explosion-proof valve, 60 - protective film, *H1* - first distance, *H2* - second distance, *A* - first included angle, *B* - second included angle, *X-* first direction, *Y* - second direction, *Z* - third direction, 70 - electricity-consumption apparatus, 80 - electricity-consumption device.

### DETAILED DESCRIPTION

The technical solutions in embodiments of the disclosure are clearly and completely described in the following with reference to the accompanying drawings in the embodiments of the disclosure. Apparently, the described embodiments are merely part of rather than all of the embodiments of the disclosure. All other embodiments obtained by those of ordinary skill in the art based on the embodiments of the disclosure without creative efforts are within the scope of the disclosure.

It may be noted that when a component is referred to as "fixed to" another component, it may be directly on the another component or there may be an intervening component. When a component is considered "connected to" another component, it may be directly connected to the another component or there may be an intervening component as well.

Unless otherwise defined, all technical and scientific terms used in the disclosure have the same meaning as commonly understood by those skilled in the art of the disclosure. The terms used in the specification of the disclosure are for merely describing embodiments rather than intending to limit the disclosure. The term "and/or" as used in the disclosure includes any and all combinations of one or more of the associated listed items.

Some embodiments of the disclosure will be described in detail hereinafter with reference to the accompanying drawings. The embodiments in the disclosure as well as features in the embodiments can be combined with each other without inconsistency.

Since the energy needed by people is highly temporal and spatial, in order to rationally utilize energy and improve energy efficiency, it is necessary to use a medium or device to store one form of energy, either in its original form or after converting it into another form of energy, and to release it in a specific form based on future application needs. Currently, the generation of green electrical energy generally relies on photovoltaic energy, wind energy, hydropower, etc., but wind energy, solar energy, and the other forms of energy commonly have issues with strong intermittency and large fluctuations, which can lead to grid instability. During peak electricity hours, there may not be enough power, while during off-peak electricity hours, there may be too much. Unstable voltage may also damage the power supply. As a result, problems such as "curtailment of wind and solar power" may arise due to insufficient electricity demand or the grid's limited capacity to accommodate power. To solve these problems, energy-storage is required. Specifically, electrical energy is converted into other forms of energy through physical or chemical means for storage, and when needed, the stored energy is converted back into electrical energy for release. In short, energy-storage is like a large "power bank" that stores electrical energy when photovoltaic energy and wind energy are abundant and releases the electrical energy stored when needed.

Taking electrochemical energy-storage as an example, this solution provides an energy-storage device, where a set of chemical batteries is disposed in the energy-storage device. Chemical elements in the chemical batteries are mainly used as an energy-storage medium, and a charging and discharging process is accompanied by chemical reactions or changes of the energy-storage medium. In short, electrical energy generated by wind energy and solar energy can be stored in the chemical battery, and when external electricity usage peaks, the electrical energy stored can be released for use, or transferred to areas with insufficient electricity.

The current application scenarios of energy-storage are relatively extensive, including power-generating-side energy-storage (wind and solar power), power-grid-side energy-storage, base station-side energy-storage, and user-side energy-storage. The corresponding types of energy-storage devices include the following.
(1) Large-scale energy-storage containers used in grid-side energy-storage scenarios, which can serve as a high-quality active and reactive power regulation power supply in a power grid, realize load matching of electrical energy in time and space, enhance the ability to integrate renewable energy, and are significant in terms of grid system standby, alleviating peak load supply pressure, and peak shaving and frequency regulation.
(2) Medium and small-sized energy-storage cabinets used in industrial and commercial energy-storage scenarios (banks, shopping malls, etc.) on the user side, which may mainly operate in a "peak shaving and valley filling" mode. Since there is a significant price difference in electricity costs between peak and off-peak electricity hours according to electricity demand, in a case where users have energy-storage devices, the users can typically charge the energy-storage cabinet/box during off-peak electricity hours to reduce costs. During peak electricity hours, the users can discharge the electricity stored in the energy-storage device for use to lower electricity costs.

A purpose of the disclosure is to provide an energy-storage device and an electricity-consumption apparatus 70 to address the issue of stress concentration occurring in a tab, which may lead to a decrease in the stability of the electrical connection and a reduction in the reliability of a secondary battery.

To achieve the purpose of the disclosure, the following technical solutions are provided in the disclosure.

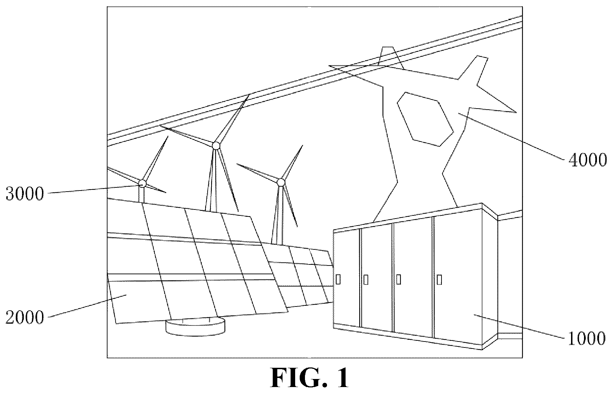

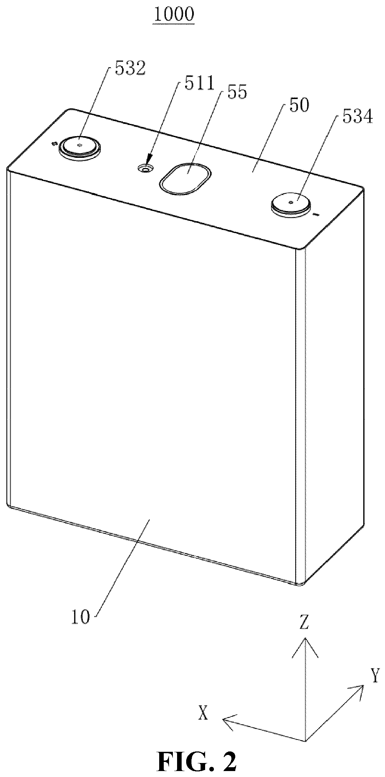

Referring to FIG. 1 and FIG. 2. An energy-storage device 1000 provided in the embodiments of the disclosure is applied in an energy-storage system. The energy-storage system includes an energy-storage device 1000, an electric energy conversion device (photovoltaic panel 2000), a wind energy conversion device (wind turbine 3000), and a power grid 4000, among others. The energy-storage device 1000 may serve as an energy-storage cabinet and may be installed outdoors. Specifically, the photovoltaic panel 2000 may convert solar energy into electrical energy during off-peak electricity hours. The energy-storage device 1000 is used to store this electrical energy and supply it to the power grid 4000 during peak electricity hours or provide power when the power grid 4000 is interrupted or out of service. The wind energy conversion device (wind turbine 3000) may convert wind energy into electrical energy, and the energy-storage device 1000 is used to store this electrical energy and supply it to the power grid 4000 during peak electricity hours or provide power when the power grid 4000 is interrupted or out of service. The transmission of electrical energy may be carried out using high-voltage cables.

The energy-storage device 1000 may be implemented as multiple energy-storage devices 1000, and the multiple energy-storage devices 1000 may be connected in series or parallel. The multiple energy-storage devices 1000 may be supported and electrically connected using isolation plates (not illustrated). In this embodiment, "multiple" refers to two or more. An energy-storage box may also be provided externally to accommodate the multiple energy-storage devices 1000.

It may be understood that the energy-storage device 1000 may include, but is not limited to, individual cells, battery modules, battery packs, battery systems, and so on. The actual application forms of the energy-storage device 1000 provided in the embodiments of the disclosure may be, but are not limited to, the products listed above, and may also include other application forms. The embodiments of the disclosure do not impose strict limitations on the application forms of the energy-storage device 1000. In the embodiments of the disclosure, the energy-storage device 1000 is exemplified by a multi-cell battery.

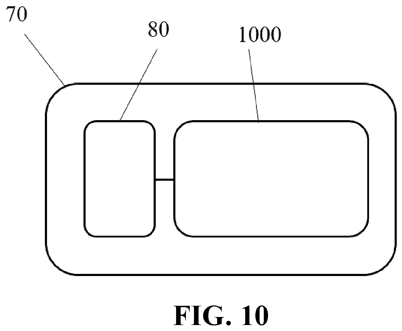

Referring to FIG. 1 and FIG. 10, the embodiments of the disclosure provide the electricity-consumption apparatus 70 that includes an electricity-consumption device 80 and the energy-storage device 1000 described in the embodiments of the disclosure. The energy-storage device 1000 is configured to power the electricity-consumption device 80. The electricity-consumption device 80 may be a power-generating-side electricity-consumption device, a power-grid-side electricity-consumption device, a base-station-side electricity-consumption device, a user-side electricity-consumption device, and so on. The electricity-consumption device 80 may specifically be various types of electrical loads, which is not limited herein.

The energy-storage device 1000 in the embodiments of the disclosure will be explained in detail below.

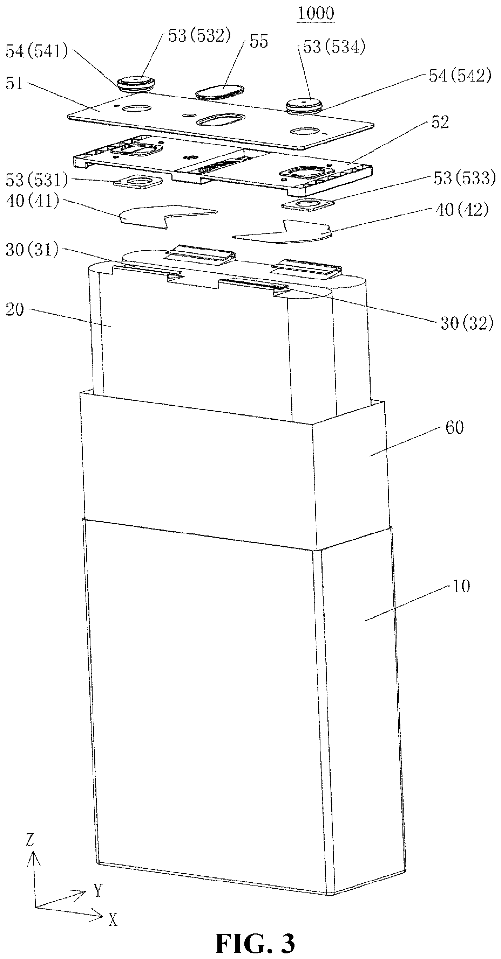

Referring to FIG. 2 and FIG. 3, the embodiments of the disclosure provide the energy-storage device 1000, which includes a housing 10, an electrode assembly 20, a tab 30, a connector 40, an end cover assembly 50, and a protective film 60. The energy-storage device 1000 is a secondary battery. For ease of explanation, a coordinate system *XYZ* is established, where first direction *X* is a width direction of the energy-storage device 1000, second direction *Y* is a thickness direction of the energy-storage device 1000, and third direction Z is a height direction of the energy-storage device 1000. First direction X, second direction Y, and third direction Z intersect each other. In the embodiments of the disclosure, first direction X, second direction Y, and third direction Z are perpendicular to each other.

The housing 10 may be an aluminum shell or a steel shell, and may be in a shape of cuboid. The housing 10 defines an accommodating space, and one end of the housing 10 in the height direction (i.e., third direction *Z*) has an opening that communicates with the accommodating space.

The electrode assembly 20 is received in the accommodating space of the housing 10. The electrode assembly 20 may be implemented as one or more electrode assemblies 20. The electrode assembly 20 may have a wound or stacked structure. The electrode assembly 20 may include a positive electrode, a negative electrode, and a separator between the positive electrode and the negative electrode, which is not limited herein. In a case where there are multiple electrode assemblies 20, the multiple electrode assemblies 20 are arranged sequentially in second direction *Y*.

One end of the tab 30 is connected to one end of the electrode assembly 20 corresponding to the opening of the accommodating space, and another end of the tab 30 is connected to the connector 40. The tab 30 includes a first tab 31 and a second tab 32 with opposite polarities. For example, the first tab 31 is a positive tab 30, and the second tab 32 is a negative tab 30. The first tab 31 is connected to the positive electrode of the electrode assembly 20, and the negative tab 30 is connected to the negative electrode of the electrode assembly 20. The tab 30 may be a bendable sheet structure, and may be made of a metal, such as aluminum or copper, which is not limited herein.

The connector 40 is connected to another end of the tab 30 that is away from the electrode assembly 20. The connector 40 may be a sheet structure, which may be bendable or non-bendable, and may be made of a metal, such as aluminum or copper, which is not limited herein. In a case where there are multiple electrode assemblies 20, the same connector 40 may be connected to all tabs 30 of the same polarity of multiple electrode assemblies 20. For example, the connector 40 includes a first connector 41 and a second connector 42 with opposite polarities. One of the first connector 41 and the second connector 42 is a positive connector 40, and another one of the first connector 41 and the second connector 42 is a negative connector 40. The first tabs 31 of the multiple electrode assemblies 20 are all connected to the first connector 41, and the second tabs 32 of the multiple electrode assemblies 20 are all connected to the second connector 42.

The end cover assembly 50 is connected to the opening of the housing 10 and closes the accommodating space. The end cover assembly 50 is also electrically connected to the connector 40, allowing the electrode assembly 20 to be electrically connected to the external environment.

A protective film 60 may be provided on an outer surface of the electrode assembly 20. The protective film 60 may be an insulating film. The protective film 60 protects the electrode assembly 20 and prevents the electrode assembly 20 from electrically connecting with an inner wall of the housing 10.

The end cover assembly 50 includes a top cover 51, a lower plastic assembly 52, a terminal post 53, a sealing ring 54, and an explosion-proof valve 55.

The top cover 51 is a flat plate, which may be an aluminum or steel plate. A length direction of the top cover 51 is first direction *X*, a width direction of the top cover 51 is second direction *Y*, and a thickness direction of the top cover 51 is third direction *Z*. The top cover 51 may define various holes, recesses, etc., for installation, which is not limited herein. The top cover 51 is used to connect to the opening of the housing 10 to close the accommodating space.

The lower plastic assembly 52 may be an integrated plastic member formed by injection molding. A length direction of the lower plastic assembly 52 is first direction *X*, a width direction of the lower plastic assembly 52 is second direction *Y*, and a thickness direction of the lower plastic assembly 52 is third direction *Z*. The lower plastic assembly 52 has a first surface 521 and a second surface 522 opposite the first surface 521. Both the first surface 521 and the second surface 522 may be substantially flat and rectangular. The first surface 521 faces towards the tab 30, and the second surface 522 is in close contact with the top cover 51. The lower plastic assembly 52 may define recesses, holes, and other structures for installation, which is not limited herein. The lower plastic assembly 52 is used to space the connector 40 and the tab 30 apart from the top cover 51, thereby preventing the connector 40 and the tab 30 from being in short circuit with the top cover 51. The lower plastic assembly 52 is also used for installation of the terminal post 53.

The terminal post 53 includes a first terminal post and a second terminal post with opposite polarities. The first terminal post is connected to the first tab 31, and the second terminal post is connected to the second tab 32. The first terminal post and the second terminal post may be of an integrated structure or a separated structure, which is not limited herein.

Optionally, as illustrated in FIG. 3, both the first terminal post and the second terminal post are of a separated structure. The first terminal post includes a first disc body 531 and a first column body 532, and the second terminal post includes a second disc body 533 and a second column body 534.

A radial dimension of the first disc body 531 (i.e., a size of the first disc body 531 in a radial direction of the first column body 532) is larger than a radial dimension of the first column body 532, so that the first disc body 531 protrudes from an outer peripheral surface of the first column body 532. The first disc body 531 is connected to the first connector 41, and both the first disc body 531 and the first connector 41 are positioned between the lower plastic assembly 52 and the electrode assembly 20. The first column body 532 extends through the lower plastic assembly 52 and the top cover 51 to be in connection with the first disc body 531, where the first terminal post is exposed to one side of the top cover 51 away from the lower plastic assembly 52. Both the first disc body 531 and the first column body 532 are conductive components, which may be made of materials such as copper, aluminum, or copper-aluminum composite.

Similarly, a radial dimension of the second disc body 533 (i.e., a size of the second disc body 533 in a radial direction of the second column body 534) is larger than a radial dimension of the second column body 534, so that the second disc body 533 protrudes from an outer peripheral surface of the second column body 534. The second disc body 533 is connected to the second connector 42, and both the second disc body 533 and the second connector 42 are located between the lower plastic assembly 52 and the electrode assembly 20. The second column body 534 extends through the lower plastic assembly 52 and the top cover 51 to be in connection with the second disc body 533, where the second terminal post is exposed to one side of the top cover 51 away from the lower plastic assembly 52. Both the second disc body 533 and the second column body 534 are conductive members, which may be made of materials such as copper, aluminum, or copper-aluminum composite.

The sealing ring 54 includes a first sealing ring 541 and a second sealing ring 542. The first sealing ring 541 is sleeved on the outer peripheral surface of the first column body 532 and abuts against an inner wall of a hole in the top cover 51. The second sealing ring 542 is sleeved on the outer peripheral surface of the second column body 534 and abuts against an inner wall of a hole in the top cover 51. Both the first sealing ring 541 and the second sealing ring 542 may be plastic components, serving to separate the first column body 532 from the top cover 51, and the second column body 534 from the top cover 51, thereby preventing contact between the first column body 532 and the top cover 51, as well as between the second column body 534 and the top cover 51, as such contact would otherwise result in a short circuit between the first column body 532 and the second column body 534 via the top cover 51.

The explosion-proof valve 55 is arranged on the top cover 51. When the electrode assembly 20 generates a large amount of gas due to abnormal thermal management and the gas pressure exceeds the threshold of the explosion-proof valve 55, the explosion-proof valve 55 will rupture to release the gas, thereby preventing accidents such as explosions due to trapped gas.

The end cover assembly 50 also defines an electrolyte injection hole 511 that extends through the top cover 51 and the lower plastic assembly 52. The electrolyte injection hole 511 is used for electrolyte injection into the accommodating space of the housing 10.

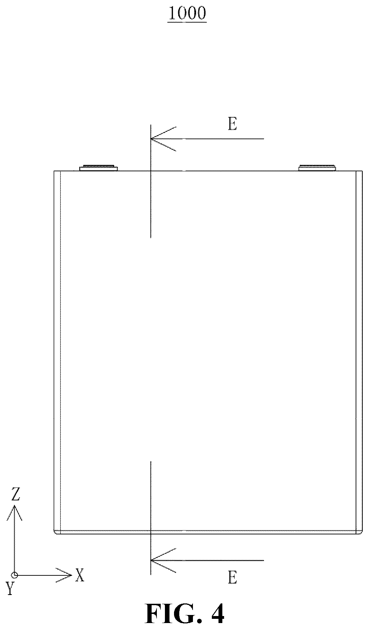

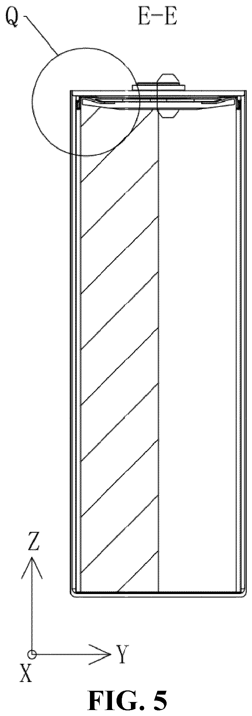

Referring to FIGS. 4 to 6, the first surface 521 of the lower plastic assembly 52 defines an avoidance recess 523. At least part of the tab 30 is received within the avoidance recess 523. The avoidance recess 523 is recessed from the first surface 521 and does not penetrate the second surface 522, thereby preventing the tab 30 from coming into contact with the top cover 51 via the avoidance recess 523, as such contact would otherwise result in a short circuit. The avoidance recess 523 is located at an edge of the lower plastic assembly 52 in the width direction of the lower plastic assembly 52 and extends in the length direction of the lower plastic assembly 52. The specific shape, structure, and dimensions of the avoidance recess 523 are not limited. Similarly, the specific shape and structure of the tab 30 are not limited, as long as at least part of the tab 30 can be received within the avoidance recess 523.

In conventional designs, the first surface 521 of the lower plastic assembly 52 is substantially flat. When arranging the tab 30, a space between the first surface 521 and the electrode assembly 20 is very narrow, making the arrangement of the tab 30 highly constrained. This can easily lead to stress concentration, thereby reducing the stability of the electrical connection and ultimately affecting the reliability of the secondary battery. Since the tab 30 includes the first tab 31 and the second tab 32, the first surface 521 of the lower plastic assembly 52 may define one avoidance recess 523 at each of the positions corresponding to the first tab 31 and the second tab 32, to accommodate at least part of the first tab 31 and at least part of the second tab 32, respectively.

In the embodiments of the disclosure, the avoidance recess 523 is defined in the first surface 521 of the lower plastic assembly 52 to accommodate at least part of the tab 30, increasing the space available for arranging the tab 30. This ample arrangement space for the tab 30 reduces stress concentration, thereby preventing a decrease in the stability of the electrical connection and ensuring the reliability of the energy-storage device 1000.

In one embodiment, as illustrated in FIGS. 3, 6, and 8, the tab 30 extends in a bent manner. The specific bending shape of the tab 30 is not limited, and the bent extension of the tab 30 facilitates the connection between the electrode assembly 20 and the connector 40.

In conventional energy-storage devices 1000, a limited space for arranging the tab 30 results in an excessively large bending angle, with the bending angle of the tab 30 approaching 180°, leading to significant stress concentration at the bend.

In contrast, in the embodiments of the disclosure, since the avoidance recess 523 can accommodate at least part of the tab 30, more space is available for bending of the tab 30. This reduces the bending angle of the tab 30, thereby decreasing stress concentration.

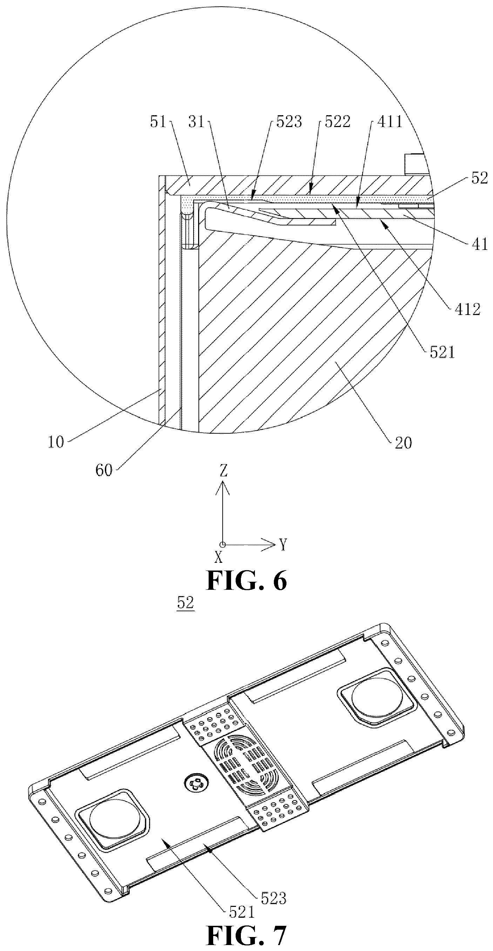

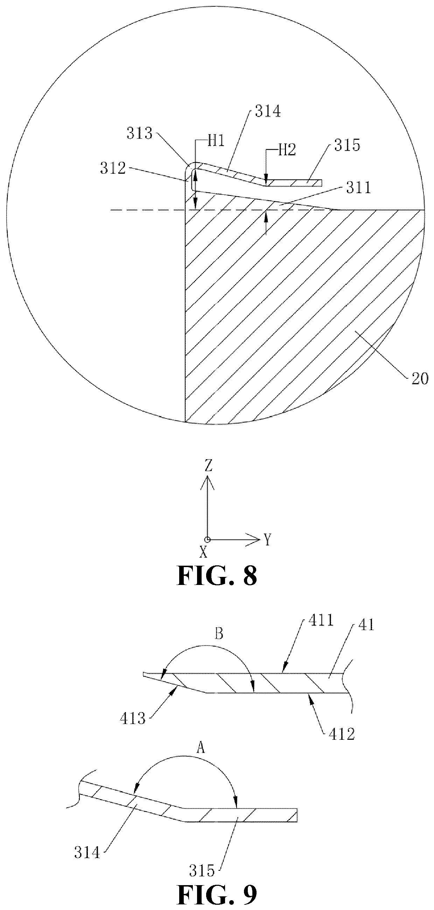

Optionally, referring to FIG. 6 and FIG. 8, the tab 30 (taking the first tab 31 as an example, with the second tab 32 being similar) has an extension portion 312, a bent portion 313, an inclined portion 314, and a connection portion 315 that are sequentially connected. One end of the extension portion 312 away from the bent portion 313 is connected to the electrode assembly 20, one end of the connection portion 315 away from the inclined portion 314 is connected to the connector 40, and the bent portion 313 extends in a bent manner and extends into the avoidance recess 523.

Exemplarily, the extension portion 312 extends in third direction Z, that is, the extension portion 312 extends in a direction from the electrode assembly 20 to the lower plastic assembly 52. The bent portion 313 is substantially arc-shaped, where one end of the bent portion 313 is smoothly connected to the extension portion 312 and another end of the bent portion 313 is smoothly connected to the inclined portion 314. The inclined portion 314 generally extends in a compound direction of first direction *X* and third direction *Z*, i.e., the inclined portion 314 is inclined with respect to both first direction *X* and third direction *Z*. There is an included angle between the inclined portion 314 and the connection portion 315. The extension portion 312, the inclined portion 314, and the connection portion 315 may each be substantially plate-shaped. The bent portion 313 represents the highest position of the tab 30 protruding from the electrode assembly 20. In the embodiments of disclosure, the bent portion 313 is farther away from the electrode assembly 20 in third direction Z than the rest of the tab 30.

By configuring the bent portion 313 to extend into the avoidance recess 523, the bending angle of the bent portion 313 can be increased, thereby enlarging the included angle between the inclined portion 314 and the extension portion 312. This prevents the bending angle of the bent portion 313 from being too small, as a too small bending angle would otherwise reduce the included angle between the inclined portion 314 and the extension portion 312 and lead to stress concentration.

Optionally, referring to FIG. 6 and FIG. 8, the tab 30 may further have a merging portion 311. One end of the merging portion 311 is connected to the electrode assembly 20, and another end of the merging portion 311 is connected to one end of the extension portion 312 away from the bent portion 313. An end surface of the electrode assembly 20 facing the lower plastic assembly 52 may be substantially flat, and multiple tabs 30 (i.e., multiple positive tabs 30 and multiple negative tabs 30) may be arranged on the same electrode (i.e., either the positive or negative electrode) of the electrode assembly 20. After winding or stacking, multiple same-polarity tabs 30 on the same electrode may be welded together to form a single tab 30. Specifically, multiple same-polarity tabs 30, initially spaced apart from each other, are brought close together to form a structure where they are in close contact, and then welded to form a unified structure. This arrangement enables the tab 30 to be electrically connected to various positions within the electrode assembly 20, thereby enhancing performance. Since the multiple tabs 30 are brought close together to form a unified structure, a cross-section of the merging portion 311 taken in second direction *Y* is generally in a shape of triangle, with the base of the triangle is the end face of the electrode assembly 20 facing the lower plastic assembly 52, and the vertex of the triangle connected to the extension portion 312. In this embodiment, the extension portion 312 is connected to the electrode assembly 20 via the merging portion 311, that is, the extension portion 312 is indirectly connected to the electrode assembly 20.

Optionally, the electrode assembly 20 may have only one tab 30. In comparison to the embodiment with the merging portion 311, in this embodiment, the extension portion 312 of the tab 30 is directly connected to the electrode assembly 20.

Optionally, the connector 40 is spaced apart from the extension portion 312. This creates a gap between the extension portion 312 and the connector 40, allowing for the arrangement of the inclined portion 314.

In conventional solutions, an orthographic projection of the connector 40 in third direction Z substantially coincides with an orthographic projection of the tab 30 in third direction Z. That is, the connector 40 is located at one side of the tab 30 away from the electrode assembly 20, completely isolating the tab 30 from the lower plastic assembly 52. This arrangement results in the arrangement space for the tab 30 being limited to a space between the connector 40 and the electrode assembly 20.

In contrast, in the embodiments of the disclosure, there is a gap between the connector 40 and the extension portion 312. Specifically, the connector 40 has a spacing distance from the extension portion 312 in second direction *Y*, effectively reducing the size of the connector 40 in second direction *Y*. This configuration allows the gap between the extension portion 312 and the connector 40 to be utilized for the arrangement of the tab 30, thereby expanding the space for the arrangement of the tab 30 and further reducing stress concentration.

In one embodiment, referring to FIG. 6 and FIG. 8, one end of the inclined portion 314 connected to the bent portion 313 is spaced apart from the electrode assembly 20 by a first distance *H*1, another end of the inclined portion 314 connected to the connection portion 315 is spaced apart from the electrode assembly 20 by a second distance *H*2, and the first distance *H*1 is greater than the second distance *H*2.

In this embodiment, the distances from both ends of the inclined portion 314 to the electrode assembly 20 refer to the lengths of the perpendicular lines drawn from these ends to the end surface of the electrode assembly 20 facing the lower plastic assembly 52.

Setting the first distance *H*1 greater than the second distance *H*2 allows the one end of the inclined portion 314 connected to the bent portion 313 to be farther away from the electrode assembly 20 than the another end of the inclined portion 314 connected to the connection portion 315. That is, with respect to the electrode assembly 20 as a reference, the height of the one end of the inclined portion 314 connected to the bent portion 313 is higher, while the height of the another end of the inclined portion 314 connected to the connection portion 315 is lower. This arrangement allows the bent portion 313 to extend into the avoidance recess 523, while the connection portion 315 can be easily connected to the connector 40.

Optionally, referring to FIGS. 6, 8, and 9, the connector 40 (taking the first connector 41 as an example) has a third surface 411 and a fourth surface 412 opposite the third surface 411, where the third surface 411 is opposite to the first surface 521, and the connection portion 315 is connected to the fourth surface 412.

The third surface 411 and the fourth surface 412 may both be substantially flat. The third surface 411 faces towards the first surface 521, and the third surface 411 may be spaced apart or in close contact with the first surface 521, which is not limited herein. The fourth surface 412 faces towards the electrode assembly 20, and the fourth surface 412 is spaced apart from the electrode assembly 20. The connection portion 315 is connected to the fourth surface 412, making the connection process between the tab 30 and the connector 40 easier. Specifically, during the connection of the tab 30 and the connector 40, the tab 30 is first welded to the fourth surface 412, and then the tab 30 is bent and assembled into the housing 10. Since the fourth surface 412 is exposed, it facilitates the welding process. Based on the connection between the connection portion 315 and the fourth surface 412, and because there is a gap between the fourth surface 412 and the third surface 411, there will necessarily be a certain distance between the fourth surface 412 and the lower plastic assembly 52. To allow the bent portion 313 to extend into the avoidance recess 523, the inclined portion 314 is configured as described above, with both ends of the inclined portion 314 positioned at different heights relative to the electrode assembly 20.

Optionally, referring to FIGS. 6, 8, and 9, the connector 40 (taking the first connector 41 as an example, with the second connector 42 being similar) has an inclined surface 413, where the inclined surface 413 connects the third surface 411 to the fourth surface 412, and the inclined surface 413 faces towards the inclined portion 314.

Since one end of the inclined portion 314 is connected to the bent portion 313, and the bent portion 313 extends into the avoidance recess 523, while the connection portion 315 is connected to the fourth surface 412, the inclined portion 314 needs to extend from a position substantially flush with the fourth surface 412 to a position substantially flush with the third surface 411 in a direction from the bent portion 313 to the connection portion 315. By providing the inclined surface 413 of the connector 40, which faces towards the inclined portion 314 and serves to allow clearance for the inclined portion 314, thereby providing a greater space for the arrangement of the inclined portion 314 and preventing the inclined portion 314 from contacting an edge corner of the connection portion 315 and avoiding damage to the tab 30.

Optionally, referring to FIG. 8 and FIG. 9, the inclined portion 314 and the connection portion 315 define a first included angle A, the inclined surface 413 and the fourth surface 412 define a second included angle *B,* and the first included angle *A* and the second included angle *B* satisfy 0° ≤ |*A - B*| ≤ 30°.

The first included angle A may be greater than, equal to, or less than the second included angle *B.* The first included angle *A* may range from 120° to 170°, specifically, it may be 120°, 130°, 135°, 140°, 150°, 160°, 170°, etc., which is not limited herein. The second included angle *B* may also range from 120° to 170°, specifically, it may be 120°, 130°, 135°, 140°, 150°, 160°, 170°, etc., which is not limited herein.

The first included angle *A* and the second included angle *B* satisfy 0° ≤ |*A* - *B*| ≤ 30°, allowing the inclined portion 314 and the inclined surface 413 to be substantially parallel to each other or to define a small included angle therebetween. This configuration prevents the inclined portion 314 from easily coming into contact with the connector 40, thereby avoiding stress concentration on the tab 30 caused by the pressure from the connector 40.

In one embodiment, referring to FIG. 6, the tab 30 protrudes beyond the third surface 411.

In this configuration, at least part of the bent portion 313 protrudes beyond the third surface 411, so that the bent portion 313 can extend into the avoidance recess 523. One end of the inclined portion 314 that connects to the bent portion 313 may be flush with the third surface 411, protrude beyond the third surface 411, or be positioned between the third surface 411 and the fourth surface 412.

Such an arrangement allows a space of the avoidance recess 523 to accommodate at least part of the tab 30, thereby increasing the space for the arrangement of the tab 30 and reducing stress concentration.

In one embodiment, referring to FIG. 6, a side wall of the avoidance recess 523 closer to a center of the lower plastic assembly 52 is aligned with a side edge of the connector 40.

Specifically, an orthographic projection of the side wall of the avoidance recess 523 closer to the center of the lower plastic assembly 52 on the top cover 51 at least partially coincides with an orthographic projection of a side edge of the connector 40 facing the extension portion 312 on the top cover 51. In this way, the connector in third direction Z does not significantly occupy the space of the avoidance recess 523, allowing sufficient room for the arrangement of the tab 30.

In one embodiment, referring to FIG. 3 and FIG. 6, the tab 30 is connected to a side edge of the electrode assembly 20 in a thickness direction of the electrode assembly 20 (i.e., second direction *Y*) and extends towards another side edge of the electrode assembly 20 in the thickness direction of the electrode assembly 20.

Compared to a configuration where the tab 30 is connected to a middle region of the electrode assembly 20 in the thickness direction of the electrode assembly 20, the embodiments of the disclosure position the tab 30 at the side edge of the electrode assembly 20 in the thickness direction of the electrode assembly 20. This allows the middle portion of the electrode assembly 20, as well as another side edge away from the tab 30, to be free from the tab 30, thereby facilitating the arrangements of other components and enabling more efficient use of limited space.

In one embodiment, referring to FIGS. 3 and 6, the first tab 31 and the second tab 32 are spaced apart from each other in the width direction of the electrode assembly 20 (i.e., first direction X), and both the first tab 31 and the second tab 32 are connected to a same side edge of the electrode assembly 20 in the thickness direction of the electrode assembly 20.

This arrangement places both the first tab 31 and the second tab 32 on the same side, thereby also facilitating the arrangements of other components and enabling more efficient use of limited space.

In one embodiment, referring to FIGS. 3, 6, and 7, the electrode assembly 20 is implemented as two electrode assemblies 20, where the two electrode assemblies 20 are arranged side by side in the thickness direction of the electrode assembly 20, and where for each of the two electrode assemblies 20, both the first tab 31 and the second tab 32 are connected to a side edge of the electrode assembly 20 away from another electrode assembly 20.

For each of the two electrode assemblies 20, the first tab 31 and the second tab 32 are connected to the side edge of the electrode assembly 20 away from another electrode assembly 20. Specifically, for each of the two electrode assemblies 20, the first tab 31 and the second tab 32 connected to the electrode assembly 20 are positioned on the outer side of the electrode assembly 20 in second direction Y of the electrode assembly 20. That is, for each of the two electrode assemblies 20, the first tab 31 of the electrode assembly 20 is positioned on a side edge of the electrode assembly 20 away from another electrode assembly 20, and the second tab 32 of the electrode assembly 20 is also positioned on the side edge of the electrode assembly 20 away from the another electrode assembly 20. This arrangement provides ample space between the two first tabs 31 of the two electrode assemblies 20, as well as ample space between the two second tabs 32 of the two electrode assemblies 20, facilitating the arrangement of other components.

Correspondingly, as illustrated in FIG. 7, the lower plastic assembly 52 defines four avoidance recesses 523. The four avoidance recesses 523 correspond one-to-one with the two first tabs 31 and the two second tabs 32.

In one embodiment, referring to FIG. 3, for each of the two electrode assemblies 20, the first tab 31 connected to the electrode assembly 20 is connected to the first connector 41, and the second tab 32 connected to the electrode assembly 20 is connected to the second connector 42.

By using a single first connector 41 to connect both the two first tabs 31 and a single second connector 42 to connect both the two second tabs 32, the number of connectors 40 is reduced from four to two compared with a configuration where each tab 30 (i.e., the first tab 31 or the second tab 32) is connected to an independent connector 40. This reduction in connectors 40 enhances the integration level of the energy storage device 1000.

It may be understood that terms such as "center", "on", "under", "left", "right", "vertical", "horizontal", "in", "out", and the like referred to herein which indicate directional relationship or positional relationship are directional relationship or positional relationship based on accompanying drawings and are only for the convenience of description and simplicity, rather than explicitly or implicitly indicate that apparatuses or components referred to herein must have a certain direction or be configured or operated in a certain direction and therefore cannot be understood as limitation on the disclosure.

## Claims

1. An energy-storage device (1000), comprising:
an electrode assembly (20);
a tab (30), wherein one end of the tab (30) is connected to the electrode assembly (20), and the tab (30) extends in a bent manner;
a connector (40) connected to another end of the tab (30); and
a lower plastic assembly (52) having a first surface (521) and a second surface (522) opposite the first surface (521), wherein the first surface (521) faces towards the tab (30), the connector (40) is located between the lower plastic assembly (52) and the electrode assembly (20), and an avoidance recess (523) is defined in the first surface (521), wherein the avoidance recess (523) is located at an edge of the lower plastic assembly (52) in a width direction of the lower plastic assembly (52) and extends in a length direction of the lower plastic assembly (52);
wherein the tab (30) has an extension portion (312), a bent portion (313), an inclined portion (314), and a connection portion (315) that are sequentially connected, wherein one end of the extension portion (312) away from the bent portion (313) is connected to the electrode assembly (20), one end of the connection portion (315) away from the inclined portion (314) is connected to the connector (40), and the bent portion (313) extends in a bent manner and extends into the avoidance recess (523).

2. The energy-storage device (1000) of claim 1, wherein the connector (40) is spaced apart from the extension portion (312).

3. The energy-storage device (1000) of claim 1 or 2, wherein one end of the inclined portion (314) connected to the bent portion (313) is spaced apart from the electrode assembly (20) by a first distance (*H*1), another end of the inclined portion (314) connected to the connection portion (315) is spaced apart from the electrode assembly (20) by a second distance *(H2),* and the first distance (*H*1) is greater than the second distance *(H2).*

4. The energy-storage device (1000) of any one of claims 1 to 3, wherein the connector (40) has a third surface (411) and a fourth surface (412) opposite the third surface (411), wherein the third surface (411) is opposite to the first surface (521), and the connection portion (315) is connected to the fourth surface (412).

5. The energy-storage device (1000) of claim 4, wherein the connector (40) has an inclined surface (413), wherein the inclined surface (413) connects the third surface (411) to the fourth surface (412), and the inclined surface (413) faces towards the inclined portion (314).

6. The energy-storage device (1000) of claim 5, wherein the inclined portion (314) and the connection portion (315) define a first included angle *A*, the inclined surface (413) and the fourth surface (412) define a second included angle *B,* and the first included angle *A* and the second included angle *B* satisfy 0° ≤ |*A* - *B*| ≤ 30°.

7. The energy-storage device (1000) of any one of claims 4 to 6, wherein the tab (30) protrudes beyond the third surface (411).

8. The energy-storage device (1000) of any one of claims 1 to 7, wherein a side wall of the avoidance recess (523) closer to a center of the lower plastic assembly (52) is aligned with a side edge of the connector (40).

9. The energy-storage device (1000) of any one of claims 1 to 8, wherein the tab (30) is connected to a side edge of the electrode assembly (20) in a thickness direction of the electrode assembly (20) and extends towards another side edge of the electrode assembly (20) in the thickness direction of the electrode assembly (20).

10. The energy-storage device (1000) of claim 9, wherein the tab (30) comprises a first tab (31) and a second tab (32) of opposite polarities, wherein the first tab (31) and the second tab (32) are spaced apart from each other in a width direction of the electrode assembly (20), and both the first tab (31) and the second tab (32) are connected to a same side edge of the electrode assembly (20) in the thickness direction of the electrode assembly (20).

11. The energy-storage device (1000) of claim 10, wherein the electrode assembly (20) is implemented as two electrode assemblies (20), wherein the two electrode assemblies (20) are arranged side by side in the thickness direction of the electrode assembly (20), and wherein for each of the two electrode assemblies (20), both the first tab (31) and the second tab (32) are connected to a side edge of the electrode assembly (20) away from another electrode assembly (20).

12. The energy-storage device (1000) of claim 11, wherein the connector (40) comprises a first connector (41) and a second connector (42), wherein for each of the two electrode assemblies (20), the first tab (31) connected to the electrode assembly (20) is connected to the first connector (41), and the second tab (32) connected to the electrode assembly (20) is connected to the second connector (42).

13. The energy-storage device (1000) of any one of claims 1 to 12, wherein the bent portion (313) is farther away from the electrode assembly (20), in a direction from the electrode assembly (20) to the lower plastic assembly (52), than the rest of the tab (30).

14. The energy-storage device (1000) of any one of claims 1 to 13, wherein an orthographic projection of a side wall of the avoidance recess (523) closer to a center of the lower plastic assembly (52) on the top cover (51) at least partially coincides with an orthographic projection of a side edge of the connector (40) facing the extension portion (312) on the top cover (51).

15. An electricity-consumption apparatus (70), comprising an electricity-consumption device (80) and an energy-storage device (1000) of any one of claims 1 to 14, wherein the energy-storage device (1000) is configured to power the electricity-consumption device.

## Patentansprüche

1. Energiespeichervorrichtung (1000), umfassend:
eine Elektrodenbaugruppe (20);
eine Lasche (30), wobei ein Ende der Lasche (30) mit der Elektrodenbaugruppe (20) verbunden ist, und die Lasche (30) sich in einer gebogenen Weise erstreckt;
einen Steckverbinder (40), der mit einem anderen Ende der Lasche (30) verbunden ist; und
eine untere Kunststoffbaugruppe (52), die eine erste Oberfläche (521) und eine zweite Oberfläche (522) gegenüber der ersten Oberfläche (521) aufweist, wobei die erste Oberfläche (521) zur Lasche (30) zeigt, wobei sich der Steckverbinder (40) zwischen der unteren Kunststoffbaugruppe (52) und der Elektrodenbaugruppe (20) befindet, und eine Umgehungsaussparung (523) in der ersten Oberfläche (521) definiert ist, wobei sich die Umgehungsaussparung (523) an einer Kante der unteren Kunststoffbaugruppe (52) in einer Breitenrichtung der unteren Kunststoffbaugruppe (52) befindet und sich in einer Längsrichtung der unteren Kunststoffbaugruppe (52) erstreckt;
wobei die Lasche (30) einen Verlängerungsabschnitt (312), einen gebogenen Abschnitt (313), einen geneigten Abschnitt (314) und einen Verbindungsabschnitt (315) aufweist, die sequenziell verbunden sind, wobei ein Ende des vom gebogenen Abschnitt (313) entfernten Verlängerungsabschnitts (312) mit der Elektrodenbaugruppe (20) verbunden ist, ein Ende des vom geneigten Abschnitt (314) entfernten Verbindungsabschnitts (315) mit dem Steckverbinder (40) verbunden ist und der gebogene Abschnitt (313) sich in gebogener Weise erstreckt und in die Umgehungsaussparung (523) erstreckt.

2. Energiespeichervorrichtung (1000) nach Anspruch 1, wobei der Steckverbinder (40) von dem Verlängerungsabschnitt (312) beabstandet ist.

3. Energiespeichervorrichtung (1000) nach Anspruch 1 oder 2, wobei ein Ende des mit dem gebogenen Abschnitt (313) verbundenen geneigten Abschnitts (314) um einen ersten Abstand (*H*1) von der Elektrodenbaugruppe (20) beabstandet ist, ein anderes Ende des mit dem Verbindungsabschnitt (315) verbundenen geneigten Abschnitts (314) um einen zweiten Abstand (*H* 2) von der Elektrodenbaugruppe (20) beabstandet ist und der erste Abstand (*H*1) größer ist als der zweite Abstand (*H*2).

4. Energiespeichervorrichtung (1000) nach einem der Ansprüche 1 bis 3, wobei der Steckverbinder (40) eine dritte Oberfläche (411) und eine vierte Oberfläche (412) gegenüber der dritten Oberfläche (411) aufweist, wobei die dritte Oberfläche (411) der ersten Oberfläche (521) gegenüberliegt, und der Verbindungsabschnitt (315) mit der vierten Oberfläche (412) verbunden ist.

5. Energiespeichervorrichtung (1000) nach Anspruch 4, wobei der Steckverbinder (40) eine geneigte Oberfläche (413) aufweist, wobei die geneigte Oberfläche (413) die dritte Oberfläche (411) mit der vierten Oberfläche (412) verbindet, und die geneigte Oberfläche (413) zum geneigten Abschnitt (314) zeigt.

6. Energiespeichervorrichtung (1000) nach Anspruch 5, wobei der geneigte Abschnitt (314) und der Verbindungsabschnitt (315) einen ersten Einschlusswinkel *A* definieren, die geneigte Oberfläche (413) und die vierte Oberfläche (412) einen zweiten Einschlusswinkel *B* definieren und der erste Einschlusswinkel *A* und der zweite Einschlusswinkel *B* 0° ≤ |A - B| ≤ 30°erfüllen.

7. Energiespeichervorrichtung (1000) nach einem der Ansprüche 4 bis 6, wobei die Lasche (30) über die dritte Oberfläche (411) hinausragt.

8. Energiespeichervorrichtung (1000) nach einem der Ansprüche 1 bis 7, wobei eine Seitenwand der Umgehungsaussparung (523), die näher an einer Mitte der unteren Kunststoffbaugruppe (52) liegt, mit einer Seitenkante des Steckverbinders (40) ausgerichtet ist.

9. Energiespeichervorrichtung (1000) nach einem der Ansprüche 1 bis 8, wobei die Lasche (30) mit einer Seitenkante der Elektrodenbaugruppe (20) in einer Dickenrichtung der Elektrodenbaugruppe (20) verbunden ist und sich in Richtung einer anderen Seitenkante der Elektrodenbaugruppe (20) in der Dickenrichtung der Elektrodenbaugruppe (20) erstreckt.

10. Energiespeichervorrichtung (1000) nach Anspruch 9, wobei die Lasche (30) eine erste Lasche (31) und eine zweite Lasche (32) mit gegenüberliegenden Polaritäten umfasst, wobei die erste Lasche (31) und die zweite Lasche (32) in einer Breitenrichtung der Elektrodenbaugruppe (20) voneinander beabstandet sind, und sowohl die erste Lasche (31) als auch die zweite Lasche (32) mit einer gleichen Seitenkante der Elektrodenbaugruppe (20) in der Dickenrichtung der Elektrodenbaugruppe (20) verbunden sind.

11. Energiespeichervorrichtung (1000) nach Anspruch 10, wobei die Elektrodenbaugruppe (20) als zwei Elektrodenbaugruppen (20) ausgeführt ist, wobei die beiden Elektrodenbaugruppen (20) nebeneinander in Dickenrichtung der Elektrodenbaugruppe (20) angeordnet sind, und wobei für jede der beiden Elektrodenbaugruppen (20) sowohl die erste Lasche (31) als auch die zweite Lasche (32) mit einer von einer anderen Elektrodenbaugruppe (20) entfernten Seitenkante der Elektrodenbaugruppe (20) verbunden sind.

12. Energiespeichervorrichtung (1000) nach Anspruch 11, wobei der Steckverbinder (40) einen ersten Steckverbinder (41) und einen zweiten Steckverbinder (42) umfasst, wobei für jede der beiden Elektrodenbaugruppen (20) die mit der Elektrodenbaugruppe (20) verbundene erste Lasche (31) mit dem ersten Steckverbinder (41) verbunden ist und die mit der Elektrodenbaugruppe (20) verbundene zweite Lasche (32) mit dem zweiten Steckverbinder (42) verbunden ist.

13. Energiespeichervorrichtung (1000) nach einem der Ansprüche 1 bis 12, wobei der gebogene Abschnitt (313) weiter von der Elektrodenbaugruppe (20) entfernt ist, in einer Richtung von der Elektrodenbaugruppe (20) zur unteren Kunststoffbaugruppe (52), als der Rest der Lasche (30).

14. Energiespeichervorrichtung (1000) nach einem der Ansprüche 1 bis 13, wobei eine orthografische Projektion einer Seitenwand der Umgehungsaussparung (523), die näher an einer Mitte der unteren Kunststoffbaugruppe (52) liegt, auf der oberen Abdeckung (51) mindestens teilweise mit einer orthografischen Projektion einer Seitenkante des Steckverbinders (40), die dem Verlängerungsabschnitt (312) auf der oberen Abdeckung (51) zugewandt ist, übereinstimmt.

15. Stromverbrauchseinrichtung (70), umfassend eine Stromverbrauchsvorrichtung (80) und eine Energiespeichervorrichtung (1000) nach einem der Ansprüche 1 bis 14, wobei die Energiespeichervorrichtung (1000) so ausgebildet ist, dass sie die Stromverbrauchsvorrichtung mit Strom versorgt.

## Revendications

1. Dispositif de stockage d'énergie (1000), comportant :
un ensemble d'électrodes (20) ;
une languette (30), dans lequel une extrémité de la languette (30) est connectée à l'ensemble d'électrodes (20), et la languette (30) s'étend d'une manière cintrée ;
un connecteur (40) connecté à une autre extrémité de la languette (30) ; et
un ensemble en plastique inférieur (52) ayant une première surface (521) et une deuxième surface (522) opposée à la première surface (521), dans lequel la première surface (521) fait face vers la languette (30), le connecteur (40) est situé entre l'ensemble en plastique inférieur (52) et l'ensemble d'électrodes (20), et un évidement d'évitement (523) est défini dans la première surface (521), dans lequel l'évidement d'évitement (523) est situé au niveau d'un bord de l'ensemble en plastique inférieur (52) dans une direction de largeur de l'ensemble en plastique inférieur (52) et s'étend dans une direction longitudinale de l'ensemble en plastique inférieur (52) ;
dans lequel la languette (30) possède une partie d'extension (312), une partie cintrée (313), une partie inclinée (314) et une partie de connexion (315) qui sont connectées en séquence, dans lequel une extrémité de la partie d'extension (312) éloignée de la partie cintrée (313) est connectée à l'ensemble d'électrodes (20), une extrémité de la partie de connexion (315) éloignée de la partie inclinée (314) est connectée au connecteur (40), et la partie cintrée (313) s'étend d'une manière cintrée et s'étend dans l'évidement d'évitement (523).

2. Dispositif de stockage d'énergie (1000) selon la revendication 1, dans lequel le connecteur (40) est espacé de la partie d'extension (312).

3. Dispositif de stockage d'énergie (1000) selon la revendication 1 ou 2, dans lequel une extrémité de la partie inclinée (314) connectée à la partie cintrée (313) est espacée de l'ensemble d'électrodes (20) d'une première distance (*H*1), une autre extrémité de la partie inclinée (314) connectée à la partie de connexion (315) est espacée de l'ensemble d'électrodes (20) d'une deuxième distance (*H*2), et la première distance (*H*1) est plus grande que la deuxième distance (*H*2).

4. Dispositif de stockage d'énergie (1000) selon l'une quelconque des revendications 1 à 3, dans lequel le connecteur (40) possède une troisième surface (411) et une quatrième surface (412) opposée à la troisième surface (411), dans lequel la troisième surface (411) est opposée à la première surface (521), et la partie de connexion (315) est connectée à la quatrième surface (412).

5. Dispositif de stockage d'énergie (1000) selon la revendication 4, dans lequel le connecteur (40) possède une surface inclinée (413), dans lequel la surface inclinée (413) connecte la troisième surface (411) à la quatrième surface (412), et la surface inclinée (413) fait face vers la partie inclinée (314).

6. Dispositif de stockage d'énergie (1000) selon la revendication 5, dans lequel la partie inclinée (314) et la partie de connexion (315) définissent un premier angle inclus *A*, la surface inclinée (413) et la quatrième surface (412) définissent un deuxième angle inclus *B*, et le premier angle inclus *A* et le deuxième angle inclus *B* satisfont 0° ≤ |A - B| ≤ 30°.

7. Dispositif de stockage d'énergie (1000) selon l'une quelconque des revendications 4 à 6, dans lequel la languette (30) fait saillie au-delà de la troisième surface (411).

8. Dispositif de stockage d'énergie (1000) selon l'une quelconque des revendications 1 à 7, dans lequel une paroi latérale de l'évidement d'évitement (523) plus proche d'un centre de l'ensemble en plastique inférieur (52) est alignée avec un bord latéral du connecteur (40).

9. Dispositif de stockage d'énergie (1000) selon l'une quelconque des revendications 1 à 8, dans lequel la languette (30) est connectée à un bord latéral de l'ensemble d'électrodes (20) dans une direction d'épaisseur de l'ensemble d'électrodes (20) et s'étend vers un autre bord latéral de l'ensemble d'électrodes (20) dans la direction d'épaisseur de l'ensemble d'électrodes (20).

10. Dispositif de stockage d'énergie (1000) selon la revendication 9, dans lequel la languette (30) comporte une première languette (31) et une deuxième languette (32) de polarités opposées, dans lequel la première languette (31) et la deuxième languette (32) sont espacées l'une de l'autre dans une direction de largeur de l'ensemble d'électrodes (20), et à la fois la première languette (31) et la deuxième languette (32) sont connectées à un même bord latéral de l'ensemble d'électrodes (20) dans la direction d'épaisseur de l'ensemble d'électrodes (20).

11. Dispositif de stockage d'énergie (1000) selon la revendication 10, dans lequel l'ensemble d'électrodes (20) est mis en œuvre sous la forme de deux ensembles d'électrodes (20), dans lequel les deux ensembles d'électrodes (20) sont agencés côte à côte dans la direction d'épaisseur de l'ensemble d'électrodes (20), et dans lequel pour chacun des deux ensembles d'électrodes (20), à la fois la première languette (31) et la deuxième languette (32) sont connectées à un bord latéral de l'ensemble d'électrodes (20) éloigné d'un autre ensemble d'électrodes (20).

12. Dispositif de stockage d'énergie (1000) selon la revendication 11, dans lequel le connecteur (40) comporte un premier connecteur (41) et un deuxième connecteur (42), dans lequel pour chacun des deux ensembles d'électrodes (20), la première languette (31) connectée à l'ensemble d'électrodes (20) est connectée au premier connecteur (41), et la deuxième languette (32) connectée à l'ensemble d'électrodes (20) est connectée au deuxième connecteur (42).

13. Dispositif de stockage d'énergie (1000) selon l'une quelconque des revendications 1 à 12, dans lequel la partie cintrée (313) est plus éloignée de l'ensemble d'électrodes (20), dans une direction allant de l'ensemble d'électrodes (20) à l'ensemble en plastique inférieur (52), que le reste de la languette (30).

14. Dispositif de stockage d'énergie (1000) selon l'une quelconque des revendications 1 à 13, dans lequel une projection orthographique d'une paroi latérale de l'évidement d'évitement (523) plus proche d'un centre de l'ensemble en plastique inférieur (52) sur le couvercle supérieur (51) coïncide au moins partiellement avec une projection orthographique d'un bord latéral du connecteur (40) faisant face à la partie d'extension (312) sur le couvercle supérieur (51).

15. Appareil de consommation d'électricité (70), comportant un dispositif de consommation d'électricité (80) et un dispositif de stockage d'énergie (1000) selon l'une quelconque des revendications 1 à 14, dans lequel le dispositif de stockage d'énergie (1000) est configuré pour alimenter en énergie le dispositif de consommation d'électricité.
